# EUROPEAN PATENT SPECIFICATION

(11) **EP 1 698 769 B1**
(45) Date of publication and mention of the grant of the patent: **28.04.2010**
(21) Application number: 06101591.3
(22) Date of filing: 13.02.2006
(51) Int. Cl.: F01N 3/20

(54) **Method and device for supply of additive for exhaust gas cleaning**
Verfahren und Vorrichtung zur Zugabe eines Additivs zur Abgasreinigung
Méthode et dispositif pour l'alimentation d'un additif pour la purification de gaz d'échappement

(30) Priority: 23.02.2005 SE 5004080
(43) Date of publication of application: 06.09.2006
(73) Proprietor: Scania CV AB, 151 87 Södertälje (SE)
(72) Inventor: Karlsson, Pär, 611 65, Nyköping (SE); Nyrén, Henrik, 151 72, Södertälje (SE)

(56) References cited:
- DE-A1- 10 256 727
- DE-A1- 19 935 920
- FR-A- 2 858 812
- US-A- 5 884 475
- US-A1- 2003 101 715
- US-A1- 2004 217 103
- US-A1- 2004 226 285
- US-B1- 6 546 899

## Description

### 1. Background

### 1.1. Technical field

The present invention relates to a method according to the introductory portion of the attached claim 1.

The invention further relates to a device according to the introductory portion of the attached claim 6.

### 1.2. Brief presentation of the state of the art

A new technique for cleaning the exhaust gases of diesel engines is based on so-called selective catalytic reduction (SCR) and takes the form of exhaust gas post-treatment which involves adding a solution of urea in water. A typical such additive is AdBlue®, which comprises 32.5% by weight of urea in aqueous solution. Additives of this kind have special characteristics, inter alia from the corrosion point of view, are modified by contact with air and have a freezing point which differs from the freezing point of water and in the case of AdBlue® is about -11°C. The action of additives of this kind is also very sensitive to composition, which means that, for this reason alone, the addition of any antifreeze substances is in practice ruled out.

A substantial problem is therefore that of maintaining exhaust gas cleaning in a Nordic climate by maintaining the supply of the relevant additive even at low outdoor temperatures without adding antifreeze substances which would alter its composition and thereby generate undesirable components in the cleaned exhaust gases.

US 2003/101715 and US-A-5884475 discloses the use of fuel return for heating additive, supplied to an SCR catalyst, to a temperature exceeding the freezing point of the additive.

### 2. Summary of the invention

The object of the present invention is to provide solutions to the problems described while maintaining the composition of relevant additives for SCR.

The object is achieved by a method and a device according to the attached claims 1 and 6 respectively. Further advantages are achieved by versions according to respective dependent claims.

### 3. Brief description of the drawings

The invention is described below in more detail with reference to examples of embodiments and the attached drawings, in which
- Fig. 1 depicts a first embodiment of a tube according to the invention, in which Fig. 1a depicts the tube as viewed when looking towards an end surface and Fig. 1b depicts a tube section as viewed from the right in Fig. 1a.
- Fig. 2 depicts schematically a tank for additive which is adapted to being heated and a tube according to the invention which is adapted to transporting additive stored in the tank to a user space, and
- Fig. 3 depicts schematically devices for connecting lines according to the invention to an additive tank.

### 4. Detailed description of preferred embodiments

In the drawings, ref. 1 denotes a tube or hose for transporting an additive 1' in the form of a solution of urea in water, e.g. AdBlue®, for cleaning of exhaust gases 1'" of a diesel engine 1" according to the so-called SCR principle.

To prevent the additive, which typically has a freezing point of about -11°C, and to thaw frozen additive, the tube is adapted to heating the additive in the tube, to which end the tube comprises not only at least one separate duct 2 for the additive but also at least one separate duct 3 preferably intended for coolant 3' of the diesel engine, whereby the coolant is intended for and adapted to heating the additive and the heating is intended to be effected to a temperature exceeding the freezing point of the additive.

According to preferred versions, said additive is AdBlue®, which, as previously mentioned, has a freezing point of about -11°C.

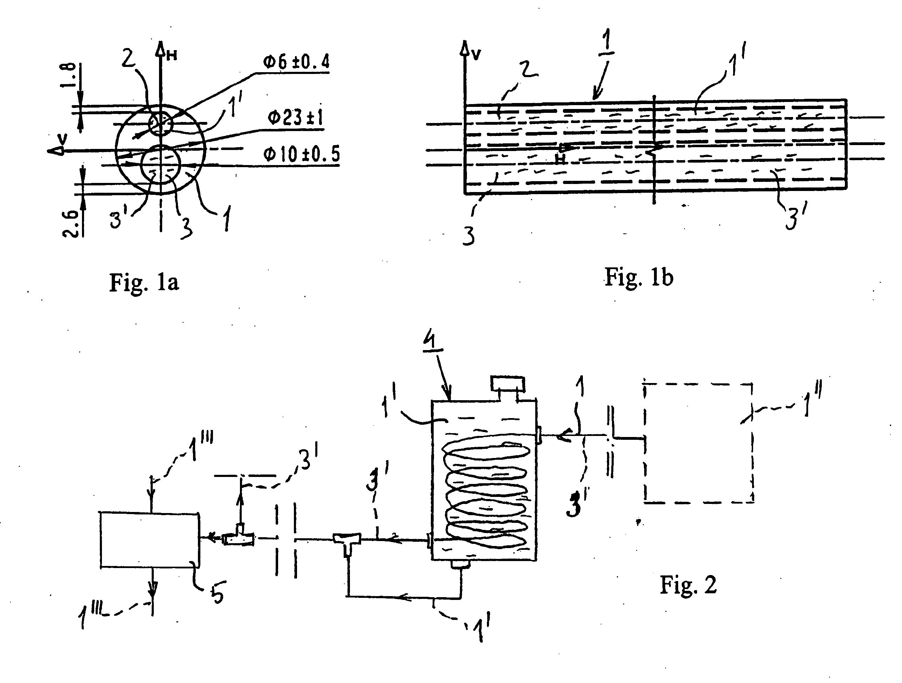

Also according to preferred versions, the tube 1 comprises two separate ducts 2, 3, one of them for additive and one for coolant, as depicted in Fig. 1.

A tube according to the invention is typically dimensioned in such a way that the outside diameter is about 23±1 mm, the duct for coolant has a diameter of about 10±0.5 mm and the duct for additive a diameter of about 6±0.4 mm.

Versions with more than two ducts are also conceivable, for example with two separate ducts for heat transfer fluid, e.g. a separate duct for said coolant and a duct for coolant from a vehicle retarder (not depicted).

The tube according to the invention is preferably made of a rubber material.

According to preferred versions (Fig. 2), a tank 4 for additive 1' is also adapted to being heated by a tube according to invention, e.g. as depicted in Fig. 2, whereby the tube runs through the tank and is adapted to supplying additive preferably after the tank, to which end only heat transfer fluid 3' runs through the tube in the tank. Additive from the container 4 is transported in the tube 1 to an exhaust gas post-treatment point 5 where SCR technology is applied.

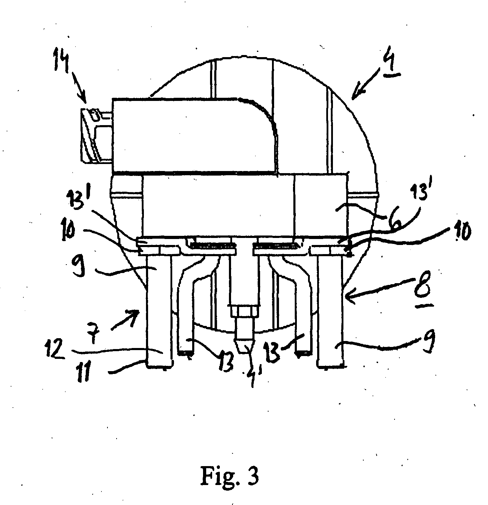

In the additive tank 4 depicted in Fig. 3, ref. 6 denotes connection devices 6 for two tubes 1 according to the invention (not depicted in Fig. 3), whereby there is a connection 7 for an outgoing line and a connection 8 for a return line. Each connection 7, 8 comprises a connection pipe 9 for heat transfer fluid 3' for connection to a tube duct 3, said pipe 9 being preferably adapted to being sealingly fastened in the connection devices by means of threads and a fastening nut 10 and comprising at least one fastening flange 11 at its free end 12 intended for connection to a line. Each connection 7, 8 also comprises a connection pipe 13 for additive 1' for connection to a tube duct 2, said pipe 13 being preferably adapted to being sealingly fastened in the connection devices by means of a fastening plate 13' attached to the pipe, which fastening plate is adapted to cooperating with the fastening for the pipe 9, while the pipe 13 is bent for fitting to the tube 1 where the distance between the ducts 2, 3 is less than the difference between the connection points of the pipes 9, 13 in the connection devices, as depicted in Fig. 3. The pipe 13 may also comprise at least one fastening flange.

The return line is adapted to returning additive from, for example, pump and line, and to supplying heat transfer fluid to a tube arrangement or pipe arrangement arranged in the additive tank for heating additive in the tank. The outgoing line is adapted to supplying additive from the tank and heat transfer fluid for the outgoing additive, whereby the heat transfer fluid passes through a pipe arrangement in the tank according to the principle outlined in Fig. 2.

The tank is also provided with an outlet 4' for venting and devices 14 for extraction of measurement signals from measurements of the level and temperature of additive in the tank.

The method and device and the tube according to the invention are perhaps substantially indicated above. Additive, e.g. AdBlue®, for SCR is thus heated to a temperature exceeding the freezing point of the additive by hot medium available from the diesel engine/vehicle concerned, preferably coolant, in the common tube with separate ducts for additive and heat transfer fluid, especially coolant. In the case of trucks with retarder, it is also conceivable to use coolant from the retarder as heat transfer fluid.

In view of the characteristics of the additive in other respects, the tube is preferably made of a rubber material such as *polypropen* and extending, in an arrangement without air supply, from the additive tank 4 to an outlet point at the exhaust gas post-treatment point 5.

The invention provides assured supply of additive for exhaust gas post-treatment even at low ambient temperatures.

The invention is described above in connection with examples of embodiments. Further embodiments and also minor modifications and additions are of course conceivable without departing from the basic concept of the invention.

Thus additives other than urea in water solution are conceivable. In particular, additives other than AdBlue® are conceivable.

Nor is the invention, as defined by the appended claims limited to being applied to diesel engines for trucks, since it is suitable for any kind of diesel engine application.

## Claims

1. A method for supply of additive, preferably in the form of a solution of urea in water, e.g. AdBlue®, from an additive tank in order to bring it into contact with exhaust gases of a diesel engine for exhaust gas post-treatment such as so-called selective catalytic reduction (SCR), comprising the step of heating of the additive (1') to a temperature exceeding the freezing point of the additive, **characterised by** transport of the additive in a tube (1) with at least two separate ducts (2,3) running adjacent to and a long each other, whereby coolant of the diesel engine is transported in at least one (3) of the ducts in order to heat the additive, said tube (1) providing a duct (3) for coolant having a cross-sectional area exceeding the cross-sectional area of the duct (2) for additive.

2. A method according to claim 1, **characterised by** heating of the additive tank (4), preferably by coolant of the diesel engine.

3. A method according to claim 1 or 2, **characterised by** heating of the additive by coolant from a vehicle retarder.

4. A method according to any one of the foregoing claims, **characterised in that** the additive takes the form of AdBlue®.

5. A method according to claim 4, **characterised in that** heating of the additive is effected to a temperature above about -11°C.

6. A device that supplies additive, preferably in the form of a solution of urea in water, e.g. AdBlue®, from an additive tank, which additive is intended for contact with exhaust gases of a diesel engine for so-called selective catalytic reduction (SCR), comprising devices (1,2,3) and a heat transfer fluid (3') for heating the additive (1') to a temperature exceeding the freezing point of the additive, **characterised by** a tube (1) for transport of additive, which tube comprises at least two separate ducts (2,3) running adjacent to and along each other whereby coolant of the diesel engine is transported in at least one separate duct (3) in order to heat the additive, the cross-sectional area of said tube duct (3) for coolant exceeding the cross-sectional area of the duct (2) for additive.

7. A device according to claim 6, **characterised by** devices (1) for heating the additive tank (4), including additive present in the tank, preferably by coolant of the diesel engine.

8. A device according to claim 6 or 7, **characterised by** devices (1) for heating of additive by coolant from a vehicle retarder.

9. A device according to claim 6, 7 or 8, **characterised in that** the additive takes the form of AdBlue®.

10. A device according to claim 6, 7, 8 or 9, **characterised in that** said tube is made of rubber.

11. A device according to any one of claims 6-10, **characterised in that** said tube has an outside diameter of about 23±1 mm, the duct for coolant a diameter of about 10±0.5 mm and the duct for additive a diameter of about 6±0.4 mm.

12. A device according to any one of claims 6-11, **characterised in that** connection devices (6) of an additive tank comprise a connection (7) for an outgoing line and a connection (8) for a return line.

13. A device according to claim 12, **characterised in that** each connection (7, 8) comprises not only a connection pipe (9) for heat transfer fluid (3'), e.g. coolant (3'), for connection to a tube duct (3) for heat transfer fluid, but also a connection pipe (13) for additive (1') for connection to a tube duct (2) for additive.

14. A device according to claim 13, **characterised in that** the connection pipe (9) for heat transfer fluid is adapted to being sealingly fastened in the connection devices (6), preferably by means of threads and a fastening nut (10), and that it preferably comprises at least one fastening flange (11) at its free end (12) intended for connection to a line, and **in that** the connection pipe (13) for additive is adapted to being sealingly fastened in the connection devices (6) by means of a fastening plate (13') attached to the pipe, which fastening plate is adapted to cooperating with the fastening for the pipe (9) for heat transfer fluid, whereby the pipe (13) for additive is preferably bent for fitting to the tube (1) where the distance between the ducts (2, 3) is less than the distance between the connection points of the pipes (9, 13) in the connection devices, and whereby the pipe (13) for additive preferably comprises at least one fastening flange.

15. A device according to claim 12, 13 or 14, **characterised in that** the connection pipe (9) for heat transfer fluid is adapted to serving as inlet and outlet for heat transfer fluid for a tube arrangement or pipe arrangement situated in the additive tank for heating of additive present in the tank.

## Patentansprüche

1. Verfahren zum Zuführen eines Additivs, vorzugsweise in Form einer wässrigen Harnstofflösung, beispielsweise AdBlue®, von einem Additivbehälter, um es mit Abgasen eines Dieselmotors für eine Abgasnachbehandlung, wie die selektive katalytische Reduktion ("selective catalytic reduction" - SCR), in Kontakt zu bringen, umfassend den Schritt Erwärmen des Additivs (1') auf eine Temperatur über dem Gefrierpunkt des Additivs,
**gekennzeichnet durch**
einen Transport des Additivs in einer Röhre (1) mit mindestens zwei separaten Kanälen (2, 3), die benachbart zueinander und aneinander entlang verlaufen, wobei Kühlmittel des Dieselmotors in mindestens einem (3) der Kanäle transportiert wird, um das Additiv zu erwärmen, wobei die Röhre (1) einen Kanal (3) für Kühlmittel aufweist, der eine größere Querschnittsfläche als die Querschnittsfläche des Kanals (2) für Additive aufweist.

2. Verfahren nach Anspruch 1,
**gekennzeichnet durch** Erwärmen des Additivbehälters (4), vorzugsweise **durch** Kühlmittel des Dieselmotors.

3. Verfahren nach Anspruch 1 oder 2,
**gekennzeichnet durch** Erwärmen des Additivs **durch** Kühlmittel eines Fahrzeugretarders.

4. Verfahren nach einem der vorangehenden Ansprüche,
**dadurch gekennzeichnet, dass** das Additiv AdBlue® ist.

5. Verfahren nach Anspruch 4,
**dadurch gekennzeichnet, dass** ein Erwärmen des Additivs auf eine Temperatur von über -11°C erfolgt.

6. Vorrichtung, die ein Additiv zuführt, vorzugsweise in Form einer wässrigen Harnstofflösung, beispielsweise AdBlue®, von einem Additivbehälter, welches Additiv für den Kontakt mit Abgasen eines Dieselmotors für die sogenannte selektive katalytische Reduktion ("selective catalytic reduction" - SCR) vorgesehen ist, umfassend Vorrichtungen (1, 2, 3) und ein Wärmeübertragungsmedium (3') zum Erwärmen des Additivs (1') auf eine Temperatur über dem Gefrierpunkt des Additivs, **gekennzeichnet durch**
eine Röhre (1) zum Transportieren des Additivs, welche Röhre mindestens zwei separate Kanäle (2, 3) umfasst, die benachbart zueinander und aneinander entlang verlaufen, wobei Kühlmittel des Dieselmotors in mindestens einem separaten Kanal (3) transportiert wird, um das Additiv zu erwärmen, wobei die Querschnittsfläche des Röhrenkanals (3) für Kühlmittel größer als die Querschnittsfläche des Kanals (2) für Additive ist.

7. Vorrichtung nach Anspruch 6,
**gekennzeichnet durch** Vorrichtungen (1) zum Erwärmen des Additivbehälters (4), einschließlich im Behälter vorhandenen Additivs, vorzugsweise **durch** Kühlmittel des Dieselmotors.

8. Vorrichtung nach Anspruch 6 oder 7,
**gekennzeichnet durch** Vorrichtungen (1) zum Erwärmen von Additiven **durch** Kühlmittel von einem Fahrzeugretarder.

9. Vorrichtung nach Anspruch 6, 7 oder 8,
**dadurch gekennzeichnet, dass** das Additiv AdBlue® ist.

10. Vorrichtung nach Anspruch 6, 7, 8 oder 9,
**dadurch gekennzeichnet, dass** die Röhre aus gummiartigem Material besteht.

11. Vorrichtung nach einem der Ansprüche 6 - 10,
**dadurch gekennzeichnet, dass** die Röhre einen Außendurchmesser von 23±1 mm, der Kanal für Kühlmittel einen Durchmesser von 10±0,5mm und der Kanal für Additive einen Durchmesser von 6±0,4mm hat.

12. Vorrichtung nach einem der Ansprüche 6 -11,
**dadurch gekennzeichnet, dass** Verbindungsvorrichtungen (6) eines Additivbehälters eine Verbindung (7) für eine ausgehende Leitung und eine Verbindung (8) für eine Rückleitung umfassen.

13. Vorrichtung nach Anspruch 12,
**dadurch gekennzeichnet, dass** jede Verbindung (7, 8) nicht nur ein Anschlussrohr (9) für ein Wärmeübertragungsmedium (3'), beispielsweise Kühlmittel (3'), zum Verbinden mit einem Röhrenkanal (3) für ein Wärmeübertragungsmedium, sondern auch ein Anschlussrohr (13) für Additive (1') zum Verbinden mit einem Röhrenkanal (2) für Additive umfasst.

14. Vorrichtung nach Anspruch 13,
**dadurch gekennzeichnet, dass** das Anschlussrohr (9) für ein Wärmeübertragungsmedium dazu ausgebildet ist, um abdichtend in den Verbindungsvorrichtungen (6) befestigt zu werden, vorzugsweise mittels Gewinde und einer Befestigungsmutter (10), und
dass es vorzugsweise mindestens einen Anschlussflansch (11) an seinem freien Ende (12), für die Verbindung mit einer Leitung, umfasst, und
dass das Anschlussrohr (13) für Additive dazu ausgebildet ist, in den Verbindungsvorrichtungen (6) mittels einer an dem Rohr angebrachten Befestigungsplatte (13') abdichtend befestigt zu werden, welche Befestigungsplatte dazu ausgestaltet ist, um mit der Befestigung für das Rohr (9) für ein Wärmeübertragungsmedium zusammenzuwirken, wobei das Rohr (13) für Additive zum Anbringen an der Röhre (1) vorzugsweise dort gebogen ist, wo der Abstand zwischen den Kanälen (2, 3) geringer als der Abstand zwischen den Verbindungspunkten der Rohre (9, 13) in den Verbindungsvorrichtungen ist, und wobei das Rohr (13) für Additive vorzugsweise mindestens einen Anschlussflansch umfasst.

15. Vorrichtung nach Anspruch 12, 13 oder 14,
**dadurch gekennzeichnet, dass** das Anschlussrohr (9) für ein Wärmeübertragungsmedium dazu ausgebildet ist, um als Einlass und Auslass für Wärmeübertragungsmedien einer Röhrenanordnung oder Rohranordnung zu dienen, die in dem Additivbehälter zum Erwärmen eines im Behälter befindlichen Additivs angeordnet ist.

## Revendications

1. Procédé d'alimentation en additif, revêtant de préférence la forme d'une solution d'urée dans l'eau, par exemple AdBlue®, à partir d'un réservoir d'additif pour l'amener en contact avec les gaz d'échappement d'un moteur diesel afin de réaliser un traitement ultérieur des gaz d'échappement tel qu'une réduction catalytique sélective (SCR), comprenant les étapes consistant à chauffer l'additif (1') à une température supérieure au point de congélation de l'additif,
**caractérisé par** le transport de l'additif dans un tube (1) à l'aide d'au moins deux conduits distincts (2, 3) disposés de manière adjacente et côte à côte, moyennant quoi le liquide de refroidissement du moteur diesel est transporté dans au moins un (3) des conduits afin de chauffer l'additif, ledit tube (1) constituant un conduit (3) pour le liquide de refroidissement dont la section en coupe est supérieure à la section en coupe du conduit (2) pour l'additif.

2. Procédé selon la revendication 1, **caractérisé par** le chauffage du réservoir d'additif (4), de préférence à l'aide du liquide de refroidissement du moteur diesel.

3. Procédé selon la revendication 1 ou 2, **caractérisé par** le chauffage de l'additif par le liquide de refroidissement provenant du ralentisseur d'un véhicule.

4. Procédé selon l'une quelconque des revendications précédentes, **caractérisé en ce que** l'additif revêt la forme d'AdBlue®.

5. Procédé selon la revendication 4, **caractérisé en ce que** le chauffage de l'additif est effectué à une température supérieure à environ - 11 °C.

6. Dispositif d'alimentation en additif, revêtant de préférence la forme d'une solution d'urée dans l'eau, par exemple AdBlue®, à partir d'un réservoir d'additif, ledit additif étant destiné à entrer en contact avec les gaz d'échappement d'un moteur diesel afin de réaliser une réduction catalytique sélective (SCR), comprenant des dispositifs (1, 2, 3) et un fluide de transfert thermique (3') pour chauffer l'additif (1') à une température supérieure au point de congélation de l'additif, **caractérisé par** un tube (1) destiné à transporter l'additif, lequel tube comprend au moins deux conduits distincts (2, 3) disposés de manière adjacente et côte à côte, moyennant quoi le liquide de refroidissement du moteur diesel est transporté dans au moins un conduit distinct (3) afin de chauffer l'additif, la section en coupe dudit conduit de tube (3) pour le liquide de refroidissement étant supérieure à la section en coupe du conduit (2) pour l'additif.

7. Dispositif selon la revendication 6, **caractérisé par** des dispositifs (1) de chauffage du réservoir d'additif (4), y compris de l'additif présent dans le réservoir, de préférence à l'aide du liquide de refroidissement du moteur diesel.

8. Dispositif selon la revendication 6 ou 7, **caractérisé par** des dispositifs (1) de chauffage de l'additif par le liquide de refroidissement provenant du ralentisseur d'un véhicule.

9. Dispositif selon la revendication 6, 7 ou 8, **caractérisé en ce que** l'additif revêt la forme d'AdBlue®.

10. Dispositif selon la revendication 6, 7, 8 ou 9, **caractérisé en ce que** ledit tube est constitué de caoutchouc.

11. Dispositif selon l'une quelconque des revendications 6 à 10, **caractérisé en ce que** ledit tube présente un diamètre extérieur d'environ 23 +/- 1 mm, le conduit pour le liquide de refroidissement un diamètre d'environ 10 +/- 0,5 mm et le conduit pour l'additif un diamètre d'environ 6 +/- 0,4 mm.

12. Dispositif selon l'une quelconque des revendications 6 à 11, **caractérisé en ce que** les dispositifs de raccordement (6) d'un réservoir d'additif comprennent un raccord (7) pour un tuyau d'évacuation et un raccord (8) pour un tuyau de retour.

13. Dispositif selon la revendication 12, **caractérisé en ce que** chaque raccord (7, 8) comprend non seulement un tuyau de raccordement (9) pour le fluide de transfert thermique (3'), par exemple un liquide de refroidissement (3'), destiné à être raccordé à un conduit de tube (3) pour le fluide de transfert thermique, mais également un tuyau de raccordement (13) pour l'additif (1') destiné à être raccordé à un conduit de tube (2) pour l'additif.

14. Dispositif selon la revendication 13, **caractérisé en ce que** le tuyau de raccordement (9) pour le fluide de transfert thermique est conçu pour être fixé de manière étanche dans les dispositifs de raccordement (6), de préférence à l'aide de vis et d'un écrou de fixation (10), et **en ce qu'**il comprend de préférence au moins une bride de fixation (11) au niveau de son extrémité libre (12) destinée à être raccordée à un conduit, et **en ce que** le tuyau de raccordement (13) pour l'additif est conçu pour être fixé de manière étanche dans les dispositifs de raccordement (6) à l'aide d'une plaque de fixation (13') fixée au tuyau, laquelle plaque de fixation est conçue pour coopérer avec la fixation du tuyau (9) pour le fluide de transfert thermique, moyennant quoi le tuyau (13) pour l'additif est de préférence plié pour s'adapter au tube (1) au niveau où la distance entre les conduits (2, 3) est inférieure à la distance entre les points de raccordement des tuyaux (9, 13) dans les dispositifs de raccordement, et moyennant quoi le tuyau (13) pour l'additif comprend de préférence au moins une bride de fixation.

15. Dispositif selon la revendication 12, 13 ou 14, **caractérisé en ce que** le tuyau de raccordement (9) pour le fluide de transfert thermique est conçu pour servir d'orifice d'admission ou d'orifice d'évacuation pour le fluide de transfert thermique pour un agencement de tube ou un agencement de tuyau situé dans le réservoir d'additif pour chauffer l'additif présent dans le réservoir.
